# EUROPEAN PATENT APPLICATION

(11) **EP 4 614 747 A1**
(43) Date of publication of application: **10.09.2025**
(21) Application number: 24161811.5
(22) Date of filing: 06.03.2024
(51) Int. Cl.: H02G 15/113, H02G 9/12, H02G 15/007, H02G 15/14

(54) **RIGID SEA JOINT SYSTEM**

(71) Applicant: NKT HV Cables AB, 371 60 Lyckeby (SE)
(72) Inventor: ZETTERVALL, Björn, Nättraby (SE)
(74) Representative: Kransell & Wennborg KB

(57) **Abstract**

A rigid sea joint system (7) for jointing submarine power cables, the rigid sea joint system (7) comprising: an outer mechanical metal casing (7a) arranged to accommodate an electrical joint between a first submarine power cable and a second submarine power cable, the outer mechanical metal casing (7a) having a first end provided with a first opening configured to receive a portion of the first submarine power cable into an interior of the outer mechanical metal casing (7a), and a second end provided with a second opening configured to receive a portion of the second submarine power cable into the interior of the outer mechanical metal casing (7a), a first metal adapter flange (27a) attached to the first end, around the first opening, a second metal adapter flange (27b) attached to the second end, around the second opening, a first metal bend restrictor (7b) attached to the first metal adapter flange (27a), a second metal bend restrictor (7c) attached to the second metal adapter flange (27b), a first electrically insulating element (8d) arranged between the first metal adapter flange (27a) and the outer mechanical metal casing (7a), electrically insulating the outer mechanical metal casing (7a) from the first metal bend restrictor (27a), and a second electrically insulating element (8g) arranged between the second metal adapter flange (27b) and the outer mechanical metal casing (7a), electrically insulating the outer mechanical metal casing (7a) from the second metal bend restrictor (7c).

## Description

### TECHNICAL FIELD

The present disclosure generally relates to rigid sea joints for submarine power cables.

### BACKGROUND

Rigid sea joints are used for jointing submarine power cables. A rigid sea joint may comprise a large and rigid outer metal casing accommodating the one or more electrical joints of the submarine power cables that are joined. Due to the seawater surrounding the outer metal casing throughout its entire lifetime, the metal in the outer metal casing may corrode. If no precautionary anti-corrosion measures are taken, the expected lifetime of the outer metal casing may be substantially shortened.

### SUMMARY

The outer cover may for example be provided with a corrosive protection coating, which covers part of the surfaces of the outer metal casing exposed to seawater. Further, rigid sea joints may be provided with sacrificial anodes designed to provide a galvanic protection to the outer metal casing over the expected lifetime of the rigid sea joint. The amount of sacrificial anode material may be calculated based on the coated and the uncoated surfaces of the outer metal casing.

To prevent the two cable lengths connected by the rigid sea joint to overbend, a respective bend restricting device, such as a bend restrictor, connected to the outer metal casing may be provided around a section of each cable length extending from the outer metal casing. If the bend restrictor is made of metal such as steel, the uncoated surface of the system comprising the rigid sea joint and connected bend restricting devices increases, and due to the electrical connection between the bend restrictor and the outer metal casing, the protection time provided to the outer metal cover by the sacrificial anode material is shortened. While it may be possible to prolong the protection time by increasing the sacrificial anode material, this may not be desirable because the mass of anode material, which is a metal, would be increased significantly thus making the rigid sea joint both heavier and more expensive. If the rigid sea joint weighs significantly more, the choice of laying vessel as well as the weather window for performing the jointing offshore becomes more limited.

In view of the above an object of the present disclosure is to provide a rigid sea joint system which solves or at least mitigates the problems of the prior art.

There is hence according to a first aspect provided a rigid sea joint system for jointing submarine power cables, the rigid sea joint system comprising: an outer mechanical metal casing arranged to accommodate an electrical joint between a first submarine power cable and a second submarine power cable, the outer mechanical metal casing having a first end provided with a first opening configured to receive a portion of the first submarine power cable into an interior of the outer mechanical metal casing, and a second end provided with a second opening configured to receive a portion of the second submarine power cable into the interior of the outer mechanical metal casing, a first metal adapter flange attached to the first end, around the first opening, a second metal adapter flange attached to the second end, around the second opening, a first metal bend restrictor attached to the first metal adapter flange, a second metal bend restrictor attached to the second metal adapter flange, a first electrically insulating element arranged between the first metal adapter flange and the outer mechanical metal casing, electrically insulating the outer mechanical metal casing from the first metal bend restrictor, and a second electrically insulating element arranged between the second metal adapter flange and the outer mechanical metal casing, electrically insulating the outer mechanical metal casing from the second metal bend restrictor.

The outer mechanical metal casing is thus electrically insulated from the first metal bend restrictor and the second metal bend restrictor. The first metal bend restrictor and the second metal bend restrictor, which are installation tools only, are thus allowed to corrode freely as they will not be protected by any sacrificial anode material protecting the outer mechanical metal casing. The amount of sacrificial anode material will thus not need to be increased to protect the outer mechanical metal casing. The total weight of the rigid sea joint system may thus be kept lower, because the first electrically insulating element and the second electrically insulating element have a significantly lower weight than the additional sacrificial anode material that would be required otherwise.

According to one embodiment the first electrically insulating element and the second electrically insulating element comprise an electrically insulating polymer material.

According to one embodiment the polymer material comprises polyoxymethylene, POM, or crosslinked polyethylene, XLPE.

According to one embodiment the outer mechanical metal casing is made of steel.

According to one embodiment the steel is carbon steel, and wherein the outer mechanical metal casing has a corrosion-protection layer covering at least a portion of the carbon steel.

The steel may for example be S355 grade steel.

The corrosion-protection layer may for example be a protective coating approved under NORSOK M-501:2022.

According to one embodiment the metal of the first metal bend restrictor is steel, such as carbon steel.

According to one embodiment the metal of the second metal bend restrictor is steel, such as carbon steel.

One embodiment comprises a plurality of galvanic protection elements attached to an inner or outer surface of the outer mechanical metal casing.

When the rigid sea joint system has been installed, the galvanic protection elements are galvanically coupled to the metal material of the outer mechanical metal casing via the seawater.

According to one embodiment the galvanic protection elements are sacrificial anodes.

According to one embodiment the galvanic protection elements comprise aluminium, zinc, or magnesium.

According to one embodiment the galvanic protection elements together comprise sufficient sacrificial material to protect only the outer mechanical metal casing from corrosion during an entire expected lifetime of the outer mechanical metal casing. The sacrificial material is of an amount which protects the outer mechanical metal casing without taking into account corrosion protection of the first metal bend restrictor and the second metal bend restrictor. In other words, the amount of sacrificial material of the galvanic protection elements is selected to only protect the outer mechanical metal casing throughout its entire expected lifetime.

According to one embodiment the expected lifetime is at least 40 years. Alternatively, the expected lifetime could be at least 30 years.

There is according to a second aspect provided a submarine power cable system comprising: a first submarine power cable, a second submarine power cable, and the rigid sea joint system of the first aspect, wherein the rigid sea joint system comprises an electrical joint arranged in the outer mechanical metal casing, wherein the first submarine power cable and the second submarine power cable are connected by means of the electrical joint, wherein the first submarine power cable extends through the first opening and the second submarine power cable extends through second opening, and wherein the first metal bend restrictor is arranged around the first submarine power cable and the second metal bend restrictor is arranged around the second submarine power cable.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a submarine power cable system;
Fig. 2 schematically shows a cross-section of a submarine power cable length;
Fig. 3 is a perspective view of part of a rigid sea joint system;
Fig. 4 shown part of an interior of the rigid sea joint system shown in Fig. 3; and
Fig. 5 is a sideview of a rigid sea joint system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

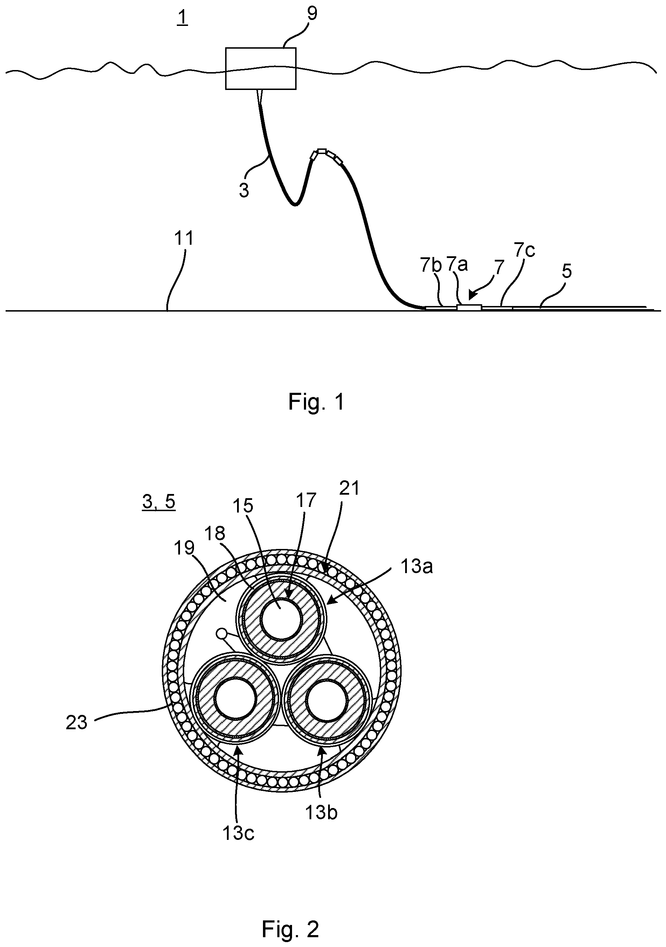

Fig. 1 schematically shows an example of a submarine power cable system 1. According to the example, the submarine power cable system 1 comprises a first submarine power cable 3, a second submarine power cable 5, and a rigid sea joint system 7 connecting the first submarine power cable 3 with the second submarine power cable 5.

The rigid sea joint system 7 comprises an outer mechanical metal casing 7a, a first metal bend restrictor 7b connected to the outer mechanical metal casing 7a, and a second metal bend restrictor 7c connected to the outer mechanical metal casing 7a.

The first metal bend restrictor 7b is arranged around the first submarine power cable 3. The second metal bend restrictor 7c is arranged around the second submarine power cable 5.

In the example shown in Fig. 1, the first submarine power cable 3 is a dynamic submarine power cable. The first submarine power cable 3 is suspended from a floating structure 9 to the seabed 11. Alternatively, the first submarine power cable 3 may be a static submarine power cable. The second submarine power cable 5 is according to the example a static submarine power cable. The second submarine power cable 5 extends on the seabed 9 or in a trench formed in the seabed 9.

Fig. 2 is a schematic cross-section of one of the first submarine power cable 3 and the second submarine power cable 5. The general structure shown in Fig. 2 may be the same for both. According to the example, the first/second submarine power cable 3, 5 is a multi-core submarine power cable, but could alternatively be a single-core submarine power cable. It is to be noted that the first/second submarine power cable 3, 5 may according to some examples have a different multi-core structure than the one exemplified in Fig. 2. The rigid sea joint system 7 is not limited to any particular single or multi-core structure, and the first/second submarine power cables 3, 5 shown in Fig. 2 is only for exemplifying purposes.

The first/second submarine power cable 3, 5 comprises one or more power cores 13a-13c. According to the example, each power core 13a-13c comprises a conductor 15, and an insulation system 17 arranged around the conductor 15. The insulation system 17 may comprise an inner semiconducting layer arranged around the conductor 15, an insulation layer arranged around the inner semiconducting layer, and an outer semiconducting layer arranged around the insulation layer. The insulation system 17 may be an extruded insulation system or an insulation system formed by wound paper tape. In case the first/second submarine power cable 3, 5 comprises three power cores 13a-13c, the power cores 13a-13c may be stranded.

Each power core 13a-13c may comprise a radial metallic water barrier 18 arranged around the insulation system 17. The radial metallic water barrier 18 may for example be a lead sheath or a longitudinally welded tube comprising copper, stainless steel, or aluminium. Alternatively, the first/second submarine power cable 3, 5 may have a wet or semi-wet design, in which case the insulation system is not hermetically sealed.

Further, the first/second submarine power cable 3, 5 may comprise three filler profiles 19, each being arranged between two adjacent pairs of power cores 13a-13c.

The first/second submarine power cable 3, 5 may comprise an armour 21 comprising one or more armour layers. Each armour layer may comprise helically laid elongated elements, such as wires, comprising metal or a synthetic material such as jacketed aramid fibres.

The first/second submarine power cable 3, 5 may comprise an outermost layer 23. The outermost layer 23 may comprise a polymeric material.

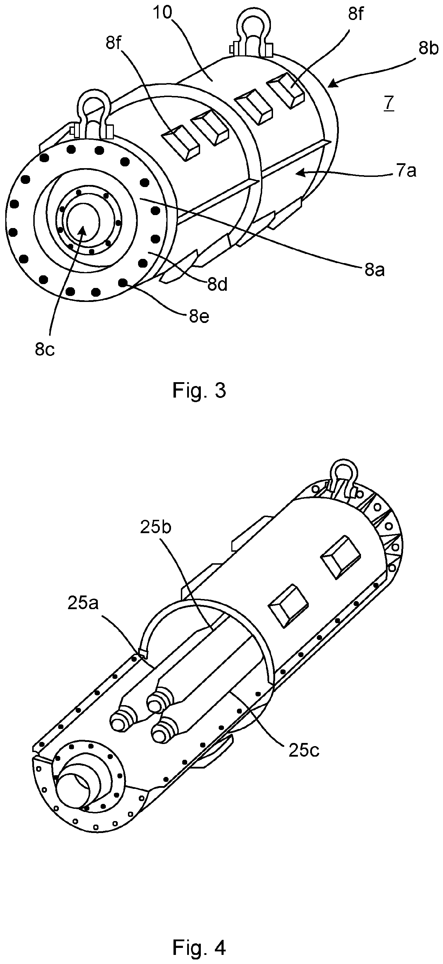

Fig. 3 is a perspective view of an example of the rigid sea joint system 7 without the first metal bend restrictor 7b and the second metal bend restrictor 7c.

The outer mechanical metal casing 7a is arranged to accommodate an electrical joint between each pair of power core 13a-13c of the first submarine power cable 3 and a second submarine power cable 5.

The outer mechanical metal casing 7a may be made of or comprise steel. The metal may be a non-stainless steel such as carbon steel. A portion, or the entirety, of the outer surface and/or the inner surface of the outer mechanical metal casing 7a may be provided with a corrosion-protection layer 10 such as a corrosion-protection coating.

The outer mechanical metal casing 7a has a first end 8a provided with a first opening 8c configured to receive a portion of the first submarine power cable 3 into the interior of the outer mechanical metal casing 7a.

The outer mechanical metal casing 7a has a second end 8b provided with a second opening configured to receive a portion of the second submarine power cable 5 into the interior of the outer mechanical metal casing 7a.

The rigid sea joint system 7 comprises a first electrically insulating element 8d attached to the first end 8a of the outer mechanical metal casing 7a and arranged around the first opening 8c. The first electrically insulating element 8d may be annular. The first electrically insulating element 8d may comprise a plurality of axial through-openings 8e distributed along the circumferential direction of the first electrically insulating element 8d.

The first electrically insulating element 8d may comprise or consist of an electrically insulating polymer material. The polymer material may for example comprise or consist of polyoxymethylene, POM, or crosslinked polyethylene, XLPE.

The rigid sea joint system 7 comprises a second electrically insulating element attached to the second end 8b of the outer mechanical metal casing 7a and arranged around the second opening. The second electrically insulating element may be annular. The second electrically insulating element may comprise a plurality of axial through-openings distributed along the circumferential direction of the second electrically insulating element.

The second electrically insulating element may comprise or consist of an electrically insulating polymer material. The polymer material may for example comprise or consist of polyoxymethylene, POM, or crosslinked polyethylene, XLPE.

The rigid sea joint system 7 comprises a plurality of galvanic protection elements 8f attached to the inner and/or outer surface of the outer mechanical metal casing 7a. The galvanic protection elements 8f may for example be screwed into or bolted to the outer mechanical metal casing 7a.

The galvanic protection elements 8f are sacrificial anodes. The metal material of the outer mechanical metal casing 7a and the galvanic protection elements 8f form an electrochemical cell, with the galvanic protection elements 8f forming the anode and the metal material of the outer mechanical metal casing 7a forming the cathode.

The galvanic protection elements 8f may comprise or consist of aluminium, zinc, or magnesium.

The galvanic protection elements 8f together may comprise sufficient mass of sacrificial material to protect the outer mechanical metal casing 7a from corrosion during an expected lifetime of the outer mechanical metal casing 7a. Hereto, the amount of sacrificial material may be calculated to protect only the outer mechanical metal casing 7a from corrosion during the expected lifetime of the outer mechanical metal casing 7a.

Fig. ₄ partially shows an interior of the outer mechanical metal casing 7a. The rigid sea joint system 7 comprises one or more inner casings 25a-25c. The number of inner casings 25a-25c is the same as the number of pairs of power cores 13a-13c of the first and second submarine power cables 3, 5 that are connected. When connected to the first and the second submarine power cable 3 and 5 the rigid sea joint system 7 comprises one or more electrical joints. The number of electrical joints is the same as the number of inner casings 25a-25c. Each inner casing 25a-25c accommodates a respective electrical joint. Each electrical joint includes the conductor joint of respective conductors of a pair of power cores 13a-13c of the first and the second submarine power cable 3 and 5, and a joint insulation system arranged around the conductor joint.

The inner casings 25a-25c may be made of metal. The inner casings 25a-25c may be watertight, especially if the first and the second power cable 3, 5 comprise a radial metallic water barrier. In this case, the radial metallic water barrier of each power core 13a-13c may be soldered to an inner casing 25a-25c.

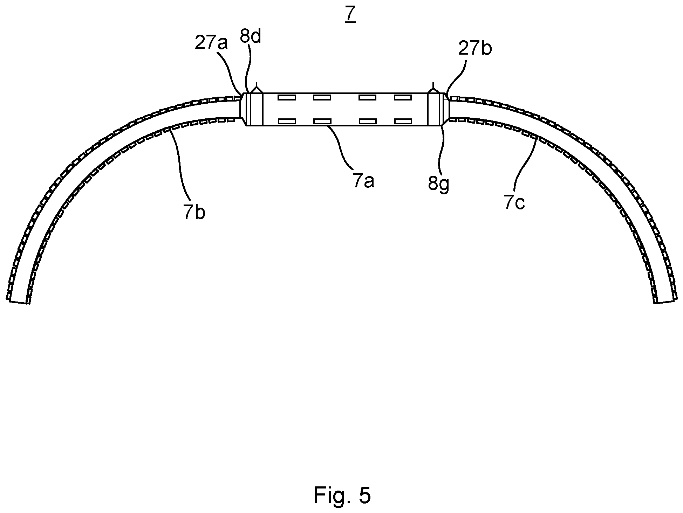

Fig. 5 shows the rigid sea joint system 1 with the first metal bend restrictor 7b and the second metal bend restrictor 7c connected to the outer mechanical metal casing 7a.

The rigid sea joint system 1 comprises a first metal adapter flange 27a. The first metal bend restrictor 7b is connected to the first metal adapter flange 27a.

The first metal adapter flange 27a may for example be made of steel, such as carbon steel.

The first electrically insulating element 8d is arranged between the first metal adapter flange 27a and the first end 8a of the outer mechanical metal casing 7a. The first metal adapter flange 27a is attached to the first end 8a, around the first opening 8c, via the first electrically insulating element 8d. The first electrically insulating element 8d electrically insulates the outer mechanical metal casing 7a from the first metal adapter flange 27a. The first electrically insulating element 8d thus electrically insulates the first metal bend restrictor 7b from the outer mechanical metal casing 7a.

The first metal bend restrictor 7b may be attached to the first end 8a of the outer mechanical metal casing 7a by means of fasteners such as bolts which are electrically insulated from the outer mechanical metal casing 7a. The axial openings through which the bolts extend may for example coated or clad with an electrically insulating material, and the nuts holding the bolts may be electrically insulated from the inner surface of the outer mechanical metal casing 7a.

The fasteners may extend through a respective one of the plurality of axial through-openings 8e of the first electrically insulating element 8d into the outer mechanical metal casing 7a.

The rigid sea joint system 1 comprises a second metal adapter flange 27b. The second metal bend restrictor 7c is connected to the second metal adapter flange 27b.

The first metal adapter flange 27a and the second metal adapter flange 27b may be reducer couplings.

The second metal adapter flange 27b may for example be made of steel, such as carbon steel.

The second electrically insulating element 8g is arranged between the second metal adapter flange 27b and the second end 8b of the outer mechanical metal casing 7a. The second metal adapter flange 27b is attached to the second end 8b, around the second opening, via the second electrically insulating element 8g. The second electrically insulating element 8g electrically insulates the outer mechanical metal casing 7a from the second metal adapter flange 27a. The second electrically insulating element 8g thus electrically insulates the second metal bend restrictor 7c from the outer mechanical metal casing 7a.

The second metal bend restrictor 7c may be attached to the second end 8b of the outer mechanical metal casing 7a by means of fasteners such as bolts which are electrically insulated from the outer mechanical metal casing 7a. The axial openings through which the bolts extend may for example coated or clad with an electrically insulating material, and the nuts holding the bolts may be electrically insulated from the inner surface of the outer mechanical metal casing 7a.

The fasteners may extend through the plurality of axial through-openings of the second electrically insulating element 8g into the outer mechanical metal casing 7a.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Rigid sea joint system (7) for jointing submarine power cables, the rigid sea joint system (7) comprising:
- an outer mechanical metal casing (7a) arranged to accommodate an electrical joint between a first submarine power cable (3) and a second submarine power cable (5), the outer mechanical metal casing (7a) having a first end (8a) provided with a first opening (8c) configured to receive a portion of the first submarine power cable (3) into an interior of the outer mechanical metal casing (7a), and a second end (8b) provided with a second opening configured to receive a portion of the second submarine power cable (5) into the interior of the outer mechanical metal casing (7a),
- a first metal adapter flange (27a) attached to the first end (8a), around the first opening (8c),
- a second metal adapter flange (27b) attached to the second end (8b), around the second opening,
- a first metal bend restrictor (7b) attached to the first metal adapter flange (27a),
- a second metal bend restrictor (7c) attached to the second metal adapter flange (27b),
- a first electrically insulating element (8d) arranged between the first metal adapter flange (27a) and the outer mechanical metal casing (7a), electrically insulating the outer mechanical metal casing (7a) from the first metal bend restrictor (27a), and
- a second electrically insulating element (8g) arranged between the second metal adapter flange (27b) and the outer mechanical metal casing (7a), electrically insulating the outer mechanical metal casing (7a) from the second metal bend restrictor (7c).

2. Rigid sea joint system (7) as claimed in claim 1, wherein the first electrically insulating element (8d) and the second electrically insulating element (8g) comprise an electrically insulating polymer material.

3. Rigid sea joint system (7) as claimed in claim 2, wherein the polymer material comprises polyoxymethylene, POM, or crosslinked polyethylene, XLPE.

4. Rigid sea joint system (7) as claimed in any of the preceding claims, wherein the outer mechanical metal casing (7a) is made of steel.

5. Rigid sea joint system (7) as claimed in claim 4, wherein the steel is carbon steel, and wherein the outer mechanical metal casing (7a) has a corrosion-protection layer (10) covering at least a portion of the carbon steel.

6. Rigid sea joint system (7) as claimed in any of the preceding claims, wherein the metal of the first metal bend restrictor (7b) is steel, such as carbon steel.

7. Rigid sea joint system (7) as claimed in any of the preceding claims, wherein the metal of the second metal bend restrictor (7c) is steel, such as carbon steel.

8. Rigid sea joint system (7) as claimed in any of the preceding claims, comprising a plurality of galvanic protection elements (8f) attached to an inner or outer surface of the outer mechanical metal casing (7a).

9. Rigid sea joint system (7) as claimed in claim 8, wherein the galvanic protection elements (8f) are sacrificial anodes.

10. Rigid sea joint system (7) as claimed in claim 8 or 9, wherein the galvanic protection elements (8f) comprise aluminium, zinc, or magnesium.

11. Rigid sea joint system (7) as claimed in any of claim 8-10, wherein the galvanic protection elements (8f) together comprise sufficient sacrificial material to protect only the outer mechanical metal casing (7a) from corrosion during an entire expected lifetime of the outer mechanical metal casing (7a).

12. Rigid sea joint system (7) as claimed in claim 11, wherein the expected lifetime is at least 40 years.

13. Submarine power cable system (1) comprising:
a first submarine power cable (3),
a second submarine power cable (5), and
the rigid sea joint system (7) as claimed in any of the preceding claims, wherein the rigid sea joint system (7) comprises an electrical joint arranged in the outer mechanical metal casing (7a),
wherein the first submarine power cable (3) and the second submarine power cable (5) are connected by means of the electrical joint, wherein the first submarine power cable (3) extends through the first opening (8c) and the second submarine power cable (5) extends through second opening, and wherein the first metal bend restrictor (7b) is arranged around the first submarine power cable (3) and the second metal bend restrictor (7c) is arranged around the second submarine power cable (5).
